# EUROPÄISCHE PATENTSCHRIFT

(11) **EP 3 738 824 B1**
(45) Veröffentlichungstag und Bekanntmachung des Hinweises auf die Patenterteilung: **25.01.2023**
(21) Anmeldenummer: 20174294.7
(22) Anmeldetag: 13.05.2020
(51) Int. Cl.: B60N 2/58, B60N 2/70, B60R 7/04

(54) **POLSTER FÜR EINEN SITZ, INSBESONDERE EINEN FAHRZEUGSITZ, FAHRZEUGSITZ**
VEHICLE SEAT, PAD FOR A SEAT, IN PARTICULAR FOR A VEHICLE SEAT
REMBOURRAGE POUR UN SIÈGE, EN PARTICULIER UN SIÈGE DE VÉHICULE, SIÈGE DE VÉHICULE

(30) Priorität: 16.05.2019 DE 102019207186; 27.11.2019 DE 102019132104
(43) Veröffentlichungstag der Anmeldung: 18.11.2020
(73) Patentinhaber: Adient US LLC, Plymouth, MI 48170 (US)
(72) Erfinder: BAJCAROVÁ, Zdenka, 91443 Omsenie (SK); CERRATO, Roberto, 10024 Moncalieri (TO) (IT); RAVINALE, Mauro, 10045 Piossasco (TO) (IT)
(74) Vertreter: Liedhegener, Ralf

(56) Entgegenhaltungen:
- DE-A1-102008 011 739
- US-A1- 2009 212 610

## Beschreibung

Die Erfindung betrifft ein Polster für einen Sitz, insbesondere einen Fahrzeugsitz mit den Merkmalen des Oberbegriffs des Anspruchs 1 sowie einen Fahrzeugsitz.

### Stand der Technik

Aus der EP 2 946 967 A1 ist ein Polster für einen Sitz bekannt, welches an einem nach vorne gerichtetem Bereich einen Stauraum aufweist.

Aus dem Stand der Technik sind unterschiedliche Polster für Sitze, insbesondere Fahrzeugsitze, bekannt. Zum Beispiel bilden die Polster eine Sitzflächenauflage und/oder Rückenauflage.

Aus der DE 10 2008 011 739 A1 ist ein Verkleidungselement und/oder Polsterelement für einen Fahrzeugsitz bekannt, wobei das Verkleidungselement und/oder Polsterelement zum Abschluss einer Rückenlehne des Fahrzeugsitzes zu einer Seite dient und das Verkleidungselement und/oder Polsterelement ein Staufach aufweist.

Aus der US 2009/212610 A1 ist ein Fahrzeugsitz bekannt, umfassend einen Sitzkörper mit einem Sitzkissen zum Sitzen eines Fahrzeuginsassen und einer Rückenlehne zum Anlehnen des Fahrzeuginsassen. Der Fahrzeugsitz weist Seitenwangen auf, welche zwischen einer Seitenfläche einer Sitzstruktur und einer Seitenfläche einer Fahrzeugkarosseriewand angeordnet sind. Jede der Seitenwangen umfasst ein Basiselement, welches einen Hohlraum aufweist. Jede der Seitenwangen weist ein äußeres Schichtelement zum Abdecken einer Vorderfläche des jeweiligen Basiselements auf.

### Aufgabe

Der Erfindung liegt die Aufgabe zu Grunde, ein Polster für einen Sitz eingangs genannter Art zu verbessern sowie einen entsprechenden Fahrzeugsitz bereitzustellen.

### Lösung

Diese Aufgabe wird erfindungsgemäß gelöst durch ein Polster für einen Sitz, insbesondere einen Fahrzeugsitz, aufweisend zumindest ein Polsterelement und einen über dem Polsterelement angeordneten Polsterbezug, wobei das Polsterelement zumindest ein Seitenpolsterelement, aufweist, wobei das Seitenpolsterelement eine zu dem Polsterbezug hin geöffnete Aussparung aufweist, wobei die Aussparung einen Stauraum bildet, in welchem Gegenstände, beispielsweise ein Mobiltelefon und/oder ein Tablet, verstaubar sind, wobei der Polsterbezug zumindest eine mit der Aussparung korrespondierende Öffnung und zumindest ein im Bereich der Öffnung angeordnetes Abdeckelement aufweist, welches in einem Nichtgebrauchszustand die Öffnung vollständig abdeckt und in einem Gebrauchszustand die Öffnung freigibt, insbesondere vollständig freigibt, wobei das Abdeckelement zumindest zwei Abdeckteile umfasst, die die Öffnung und die Aussparung vollständig abdecken oder verschließen, wobei die Abdeckteile übereinandergelegt sind.

Dadurch, dass der Polsterbezug zumindest eine mit der Aussparung korrespondierende Öffnung und zumindest ein im Bereich der Öffnung angeordnetes Abdeckelement aufweist, welches in einem Nichtgebrauchszustand die Öffnung vollständig abdeckt und in einem Gebrauchszustand die Öffnung freigibt, insbesondere vollständig freigibt, ist der im Polsterelement integrierte Stauraum für eine auf dem Sitz sitzende Person, insbesondere einen Fahrzeuginsassen, leicht und schnell zugänglich. Insbesondere ist der Stauraum in unmittelbarer Nähe der Person ausgebildet.

Vorteilhafte Ausgestaltungen, welche einzeln oder in Kombination miteinander eingesetzt werden können, sind Gegenstand der Unteransprüche.

Das Seitenpolsterelement kann eine Seitenwange sein. Die Seitenwange kann seitlich von einem Körper eines in dem Fahrzeugsitz zu befördernden Insassen angeordnet sein, um den Körper, insbesondere bei Kurvenfahrten, zu stützen.

Die Aussparung ist beispielsweise eine in dem Polsterelement eingebrachte Vertiefung oder Ausnehmung. Das Polsterelement ist beispielsweise ein Schaumstoffelement.

Der Polsterbezug ist beispielsweise ein Verkleidungsteil. Der Polsterbezug ist beispielsweise aus Textilien oder Naturmaterialien, insbesondere einem Stoff, einem Leder, einem Kunststoff oder einem Kunstleder, gebildet. Das Abdeckelement ist beispielsweise mit einem die Öffnung umgebenden Bereich des übrigen Polsterbezugs im Bereich der Öffnung abschnittsweise vernäht. Das Abdeckelement ist beispielsweise aus Textilien oder Naturmaterialien, insbesondere einem Stoff, einem Leder, einem Kunststoff oder einem Kunstleder, gebildet. Die Abdeckteile sind beispielsweise miteinander verschließbar ausgebildet.

Mittels des Abdeckelements kann der Stauraum vollständig abdeckbar und/oder verschließbar sein. Beispielsweise können dadurch Gegenstände gegen ein Herausfallen gesichert werden. Zudem kann ein Erscheinungsbild des Polsters verbessert sein, wenn die Öffnung und somit die Aussparung vollständig abdeckbar sind. Der Polsterbezug kann im Nichtgebrauchszustand des Abdeckelements eine im Wesentlichen (optisch und haptisch) ebene und gleichmäßige Auflagefläche bilden.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: schematisch in perspektivischer Ansicht einen Fahrzeugsitz mit jeweils einem Sitzteilpolster und einem Lehnenpolster,
- Fig. 2:: schematisch eine vergrößerte Darstellung eines Polsterelements des Sitzteilpolsters,
- Fig. 3:: schematisch ein Polsterelement eines Sitzteilpolsters,
- Fig. 4:: schematisch ein Sitzteilpolster mit einem Polsterelement und einem darüber angeordneten Polsterbezug,
- Fig. 5A, 5B:: ausschnittsweise ein Abdeckelement des Polsterbezugs des Sitzteilpolsters gemäß einer ersten Ausführungsform,
- Fig. 6A, 6B:: ausschnittsweise ein Abdeckelement des Polsterbezugs des Sitzteilpolsters gemäß einer zweiten Ausführungsform,
- Fig. 7A, 7B:: ausschnittsweise ein Abdeckelement des Polsterbezugs des Sitzteilpolsters gemäß einer dritten Ausführungsform, und
- Fig. 8:: schematisch eine Rückansicht des Polsterelements, wobei das Polsterelement an einer Gitterträgerstruktur des Fahrzeugsitzes fixiert ist.

Einander entsprechende Teile sind in allen Figuren mit den gleichen Bezugszeichen versehen.

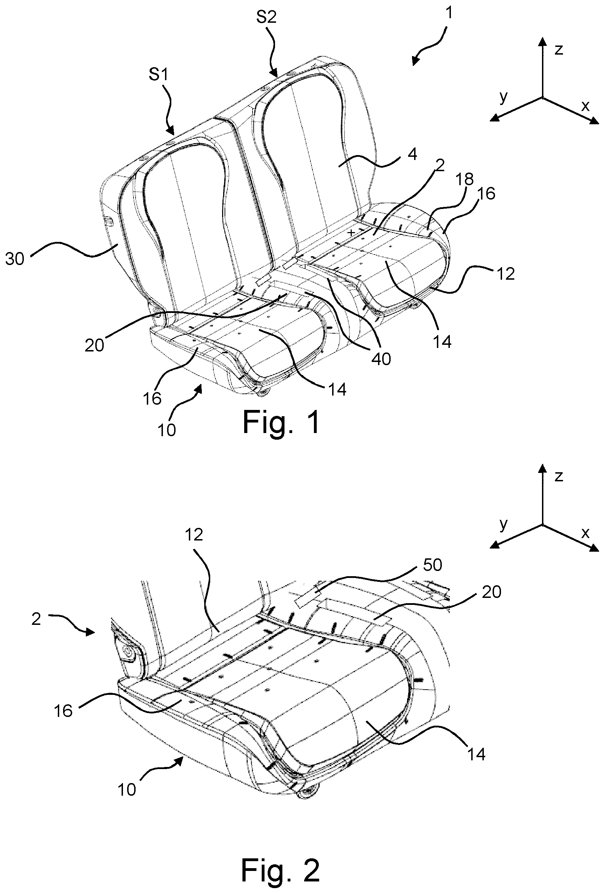

Ein in Fig. 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Rückenlehne 4 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Fig. 1 zeigt den Fahrzeugsitz 1 mit einem Polster 10 für ein Sitzteil 2 des Fahrzeugsitzes 1 und einem Polster 30 für die Rückenlehne 4 des Fahrzeugsitzes 1. Das Polster 10 für das Sitzteil 2 wird im Folgenden beispielhaft als Sitzteilpolster 10 bezeichnet. Das Polster 30 für die Rückenlehne 4 wird im Folgenden als Lehnenpolster 30 bezeichnet.

Der Fahrzeugsitz 1 kann als eine in einem Fahrzeug angeordnete Sitzbank ausgeführt sein. Beispielsweise umfasst der Fahrzeugsitz 1 zumindest zwei von jeweils einem Insassen einnehmbare Sitzplätze S1, S2.

Fig. 2 zeigt schematisch eine vergrößerte Darstellung eines Polsterelements 12 des Sitzteilpolsters 10. In Fig. 2 ist unter anderem ein Polsterbezug 18 des Sitzteilpolsters 10 ausgeblendet.

Das Sitzteilpolster 10 umfasst zumindest ein Polsterelement 12 und einen das Polsterelement 12 zumindest abschnittsweise umgebenden Polsterbezug 18. Das Sitzteilpolster 10 weist insbesondere im Bereich der Sitzplätze S1, S2 jeweils eine Sitzfläche 14 auf. Im Randbereich des Sitzteils 2 umfasst das Polsterelement 12 jeweils Seitenpolsterelemente 16, wie beispielsweise Seitenwangen zur seitlichen Abstützung eines Insassen. Im dargestellten Ausführungsbeispiel ist jeweils ein Seitenpolsterelement 16 auf einer in Querrichtung y betrachtet nach außen gerichteten Seite der jeweiligen Sitzfläche 14 angeordnet. Auf einer in Querrichtung y betrachtet nach innen gerichteten Seite der jeweiligen Sitzfläche 14 ist das Polsterelement 12 mit einer Aussparung 40 versehen. Die Aussparung 40 bildet dabei einen Stauraum und/oder ein Ablagefach für mindestens einen Gegenstand, insbesondere für mindestens einen kleinen Gegenstand eines Fahrzeuginsassen. Beispielsweise können ein Tablet, ein oder mehrere Mobiltelefone, Schreibwaren, ein Kinderspielzeug etc. in die Aussparung 40 gesteckt und in dieser verstaut werden. Solch ein Stauraum ist insbesondere schnell und leicht für einen Insassen zugänglich. Der Stauraum ist dabei in unmittelbarer Nähe des Insassen angeordnet.

Die Aussparung 40 ist im Bereich einer im Polsterelement 12 eingebrachten Gurtschlossdurchführung 50 ausgebildet. Beispielsweise ist die Aussparung 40 in Form eines Langlochs/Rechtecks ausgebildet und erstreckt sich im Wesentlichen in Längsrichtung x des Sitzteils 2. Zum Beispiel erstreckt sich die Aussparung 40 im Wesentlichen über einen mittleren Bereich (in Längsrichtung x gesehen) des Sitzteils 2.

Die Aussparung 40 ist nach oben, d. h. zur so genannten A-Seite des Sitzteilpolsters 10 bzw. zur Sitzfläche 14 hin, offen. Die A-Seite ist also eine dem Insassen zugewandte Seite des Sitzteilpolsters 10 bzw. der Sitzfläche 14. Die Aussparung 40 bildet insbesondere eine Tasche zum Einstecken und zur Aufbewahrung von Gegenständen. Die Aussparung 40 kann als Durchgangsöffnung ausgebildet sein.

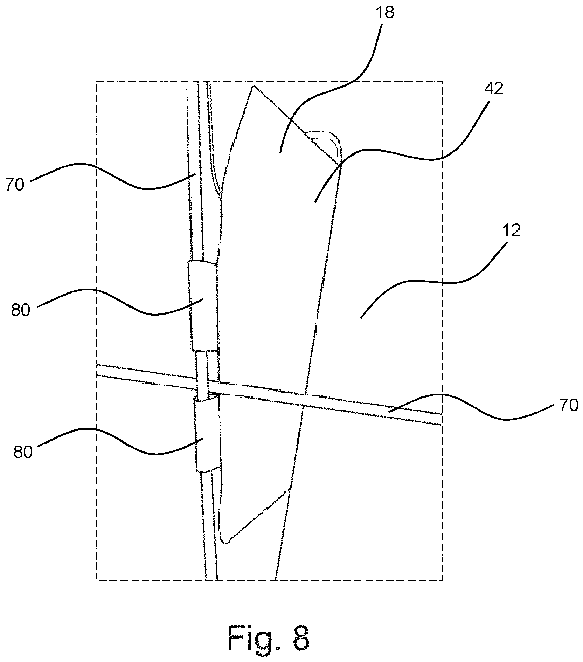

Der Polsterbezug 18 umfasst eine mit der Aussparung 40 korrespondierende Öffnung 20. Des Weiteren kann der Polsterbezug 18 eine in die Aussparung 40 steckbare, in Fig. 8 gezeigte Haltetasche 42 aufweisen. Beispielsweise ist die Haltetasche 42 mit dem Polsterbezug 18 im Bereich der Öffnung 20 vernäht. Die Öffnung 20 ist auf der A-Seite des Sitzteils 2 angeordnet. Insbesondere bildet der Polsterbezug 18 eine Auflagefläche, insbesondere eine Sitzauflagefläche, für einen Insassen.

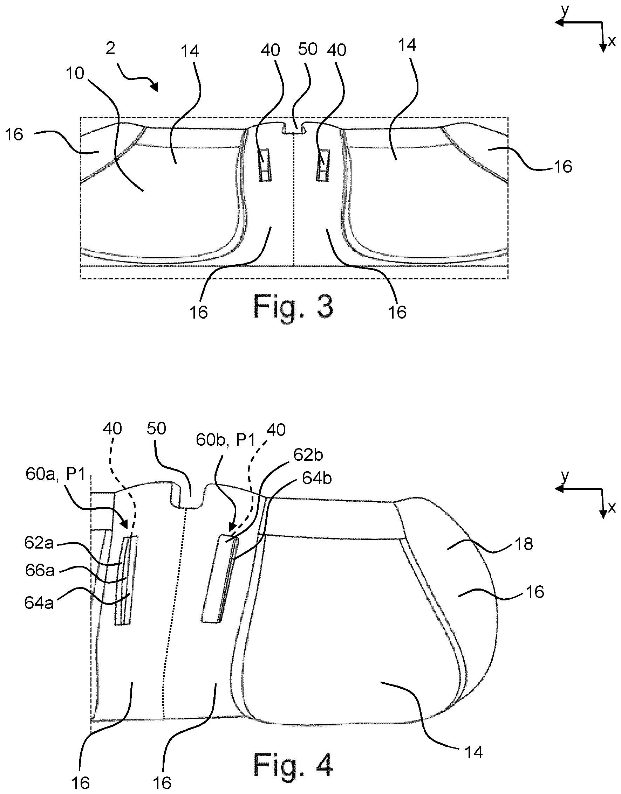

Fig. 3 zeigt schematisch eine Ausführungsform eines Polsterelements 12 eines Sitzteilpolsters 10. Das Polsterelement 12 ist beispielsweise eine aus Schaumstoff gebildete Polsterung für einen Sitz.

Fig. 4 zeigt schematisch eine Ausführungsform eines Sitzteilpolsters 10 mit einem Polsterelement 12 und einem darüber angeordneten Polsterbezug 18.

Das Polsterelement 12 umfasst auf beiden Seiten einer Sitzfläche 14 jeweils ein Seitenpolsterelement 16, wie beispielsweise eine Seitenwange, wobei zumindest eines der Seitenpolsterelemente 16 eine zu dem Polsterbezug 18, insbesondere einer Auflagefläche (A-Seite) des Polsterbezugs 18, hin geöffnete Aussparung 40 aufweist. Die Aussparung 40 bildet einen Stauraum, in welchem Gegenstände von Fahrzeuginsassen, wie Mobiltelefone und Tablets, verstaubar sind. Der Polsterbezug 18 umfasst zumindest eine mit der Aussparung 40 korrespondierende Öffnung 20 und zumindest ein im Bereich der Öffnung 20 angeordnetes Abdeckelement 60a, 60b, welches in einem Nichtgebrauchszustand P1 die Öffnung 20 und somit den Stauraum vollständig abdeckt und in einem Gebrauchszustand P2 die Öffnung 20 und somit den Stauraum freigibt. Die Öffnung 20 kann manuell vom Insassen verschlossen oder geöffnet werden.

Das Abdeckelement 60a, 60b umfasst zumindest zwei Abdeckteile 62a, 64a, 62b, 64b, die die jeweilige Öffnung 20 und die jeweilige Aussparung 40 vollständig abdecken oder verschließen. Die Abdeckteile 62a, 64a sind beispielsweise miteinander verschließbar ausgebildet. Die Abdeckteile 62b, 64b sind beispielsweise übereinandergelegt.

Das in Fig. 4 gezeigte Sitzteilpolster 10 weist links eine andere Ausbildung der Abdeckteile 62a, 64a als die Ausbildung der rechten Abdeckteile 62b, 64b auf. Zum Beispiel umfasst das linke Abdeckelement 60a zwei miteinander verschließbare Abdeckteile 62a, 64a und ein Verschlussmittel 66a. Das Verschlussmittel 66a ist beispielsweise ein Zipper bzw. ein Reißverschluss. Durch Aufziehen oder Zuziehen (insbesondere in Längsrichtung x) des Verschlussmittels 66a ist ein Zugang zum Stauraum (die Öffnung 20 und somit die Aussparung 40) freigebbar oder verschließbar.

Das in Fig. 4 gezeigte rechte Abdeckelement 60b umfasst zwei übereinandergelegte Abdeckteile 62b, 64b. Beispielsweise sind diese Abdeckteile 62b, 64b in Form von Laschen oder Umschlagrändern ausgebildet und mit dem Polsterbezug 18 im Bereich der Öffnung 20 zumindest teilweise vernäht. Durch Auseinanderdrücken (vorzugsweise in Querrichtung y) oder Übereinanderlegen (vorzugsweise in Vertikalrichtung z) der Abdeckteile 62b, 64b ist ein Zugang zum Stauraum (die Öffnung 20 und somit die Aussparung 40) freigebbar oder verschließbar.

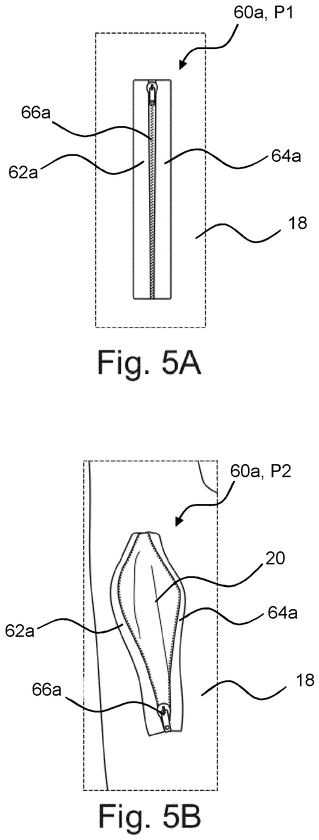

Figuren 5A und 5B zeigen schematisch eine Ausführungsform eines Abdeckelements 60a des Polsterbezugs 18, wobei Fig. 5A die Abdeckteile 62a, 64a in einem Nichtgebrauchszustand P1 zeigt, in welchem die Öffnung 20 und somit der Stauraum bzw. die Aussparung 40 verschlossen sind, und Fig. 5B die Abdeckteile 62a, 64a in einem Gebrauchszustand P2 zeigt, in welchem die Öffnung 20 und somit der Stauraum bzw. die Aussparung 40 freigelegt sind. Insbesondere zeigen die Figuren 5A und 5B das in Fig. 4 links dargestellte Abdeckelement 60a.

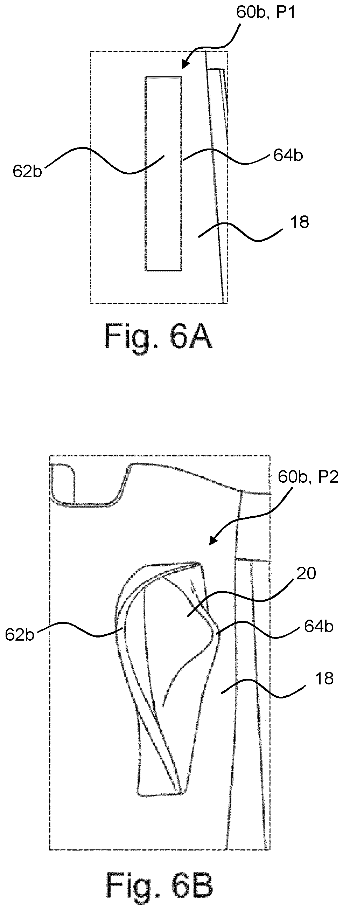

Figuren 6A und 6B zeigen schematisch eine weitere Ausführungsform eines Abdeckelements 60b des Polsterbezugs 18, wobei Fig. 6A die Abdeckteile 62b, 64b in einem Nichtgebrauchszustand P1 zeigt, in welchem die Öffnung 20 und somit der Stauraum bzw. die Aussparung 40 verschlossen sind, und Fig. 6B die Abdeckteile 62b, 64b in einem Gebrauchszustand P2 zeigt, in welchem die Öffnung 20 und somit der Stauraum bzw. die Aussparung 40 freigelegt sind. Insbesondere zeigen die Figuren 6A und 6B das rechts in Fig. 4 dargestellte Abdeckelement 60b.

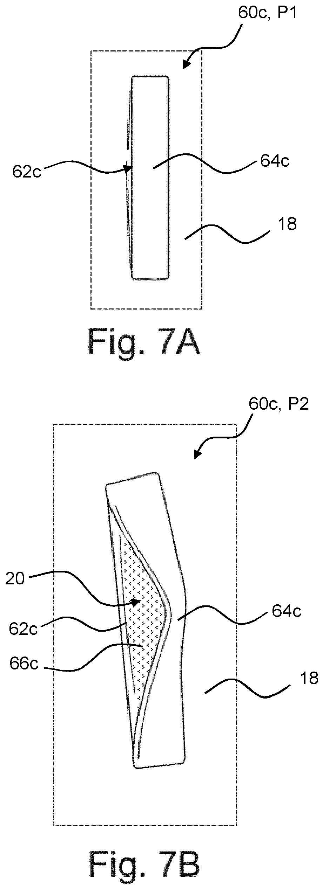

Figuren 7A und 7B zeigen schematisch eine weitere Ausführungsform eines Abdeckelements 60c des Polsterbezugs 18, wobei Fig. 7A die Abdeckteile 62c, 64c in einem Nichtgebrauchszustand P1 zeigt, in welchem die Öffnung 20 und somit der Stauraum bzw. die Aussparung 40 verschlossen sind, und Fig. 7B die Abdeckteile 62c, 64c in einem Gebrauchszustand P2 zeigt, in welchem die Öffnung 20 und somit der Stauraum bzw. die Aussparung 40 freigelegt sind.

Das Abdeckelement 60c umfasst zumindest zwei Abdeckteile 62c, 64c, die die Öffnung 20 und die Aussparung 40 vollständig abdecken oder verschließen. Die Abdeckteile 62c, 64c sind in einem Nichtgebrauchszustand P1 miteinander verschließbar und übereinandergelegt. Zum Beispiel umfasst das Abdeckelement 60c zwei miteinander verschließbare Abdeckteile 62c, 64c, wobei die Abdeckteile 62c, 64c mit miteinander korrespondierenden Verschlussmittel 66c versehen sind. Die Verschlussmittel 66c bilden beispielsweise eine Klettverschlussverbindung. Durch Abziehen oder Zudrücken (insbesondere in Vertikalrichtung z) des oben gelegenen Abdeckteils 64c von dem unten gelegenen Abdeckteil 62c oder auf das unten gelegene Abdeckteil 62c ist ein Zugang zum Stauraum (die Öffnung 20 und somit die Aussparung 40) freigebbar oder verschließbar.

Fig. 8 zeigt schematisch eine Rückansicht des Polsterelements 12, wobei das Polsterelement 12 an einer Gitterträgerstruktur 70 des Fahrzeugsitzes 1 bzw. eines Sitzes fixiert ist. Beispielsweise ist die Aussparung 40 als Durchgangsöffnung ausgebildet. Auf einer Unterseite/Rückseite (so genannte B-Seite) des Polsterelements 12 wird der Polsterbezug 18 hinausgeführt und an der Gitterträgerstruktur 70 befestigt. Der Polsterbezug 18 umfasst beispielsweise eine mit der Aussparung 40 korrespondierende und in diese eingesteckte Haltetasche 42. Die Haltetasche 42 umfasst auf einer Unterseite/Rückseite Befestigungselemente 80, wie beispielsweise Hakenelemente oder Clipselemente, die mit der Gitterträgerstruktur 70 verbunden sind.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Rückenlehne
- 10: Polster, insbesondere Sitzteilpolster
- 12: Polsterelement
- 14: Sitzfläche
- 16: Seitenpolsterelement
- 18: Polsterbezug
- 20: Öffnung
- 30: Polster, insbesondere Lehnenpolster
- 40: Aussparung
- 42: Haltetasche
- 50: Gurtschlossdurchführung
- 60a, 60b, 60c: Abdeckelement
- 62a, 62b, 62c: Abdeckteil
- 64a, 64b, 64c: Abdeckteil
- 66a, 66c: Verschlussmittel
- 70: Gitterträgerstruktur
- 80: Befestigungselement
- P1: Nichtgebrauchszustand
- P2: Gebrauchszustand
- S1, S2: Sitzplatz
- x: Längsrichtung
- y: Querrichtung
- z: Vertikalrichtung

## Patentansprüche

1. Polster (10, 30) für einen Sitz, insbesondere einen Fahrzeugsitz (1), aufweisend zumindest ein Polsterelement (12) und einen über dem Polsterelement (12) angeordneten Polsterbezug (18), wobei das Polsterelement (12) zumindest ein Seitenpolsterelement (16) aufweist, wobei das Seitenpolsterelement (16) eine zu dem Polsterbezug (18) hin geöffnete Aussparung (40) aufweist, wobei die Aussparung (40) einen Stauraum bildet, in welchem Gegenstände verstaubar sind, wobei der Polsterbezug (18) zumindest eine mit der Aussparung (40) korrespondierende Öffnung (20) und zumindest ein im Bereich der Öffnung (20) angeordnetes Abdeckelement (60a, 60b, 60c) aufweist, welches in einem Nichtgebrauchszustand (P1) die Öffnung (20) vollständig abdeckt, und in einem Gebrauchszustand (P2) die Öffnung (20) freigibt, insbesondere vollständig freigibt, wobei das Abdeckelement (60b, 60c) zumindest zwei Abdeckteile (62b, 64b; 62c, 64c) umfasst, die die Öffnung (20) und die Aussparung (40) vollständig abdecken oder verschließen,
**dadurch gekennzeichnet, dass**
die Abdeckteile (62b, 64b; 62c, 64c) übereinandergelegt sind.

2. Polster (10, 30) gemäß Anspruch 1, wobei das Seitenpolsterelement (16) eine Seitenwange ist.

3. Polster (10, 30) gemäß einem der Ansprüche 1 oder 2, wobei die Aussparung (40) eine im Polsterelement (12) eingebrachte Vertiefung oder Ausnehmung ist.

4. Polster (10, 30) gemäß einem der Ansprüche 1 bis 3, wobei das Polsterelement (12) ein Schaumstoffelement ist.

5. Polster (10, 30) gemäß einem der Ansprüche 1 bis 4, wobei der Polsterbezug (18) ein Verkleidungsteil ist.

6. Polster (10, 30) gemäß einem der Ansprüche 1 bis 5, wobei der Polsterbezug (18) aus Textilien oder Naturmaterialien gebildet ist.

7. Polster (10, 30) gemäß Anspruch 6, wobei der Polsterbezug (18) aus einem Stoff, einem Leder, einem Kunststoff oder einem Kunstleder gebildet ist.

8. Polster (10, 30) gemäß einem der Ansprüche 1 bis 7, wobei das Abdeckelement (60b, 60c) mit einem die Öffnung (20) umgebenden Bereich des übrigen Polsterbezugs (18) vernäht ist.

9. Polster (10, 30) gemäß einem der Ansprüche 1 bis 8, wobei das Abdeckelement (60b, 60c) aus Textilien oder Naturmaterialien gebildet ist.

10. Polster (10, 30) gemäß Anspruch 9, wobei das Abdeckelement (60b, 60c) aus einem Stoff, einem Leder, einem Kunststoff oder einem Kunstleder gebildet ist.

11. Polster (10, 30) gemäß einem der Ansprüche 1 bis 10, wobei die Abdeckteile (62b, 64b; 62c, 64c) miteinander verschließbar ausgebildet sind.

12. Polster (10, 30) gemäß einem der Ansprüche 1 bis 11, wobei der Stauraum Mittels des Abdeckelements (60b, 60c) vollständig abdeckbar ist.

13. Polster (10, 30) gemäß einem der Ansprüche 1 bis 12, wobei die Abdeckteile (62c, 64c) mit miteinander korrespondierenden Verschlussmitteln (66c) versehen sind.

14. Polster (10, 30) gemäß Anspruch 13, wobei die Verschlussmittel (66c) eine Klettverschlussverbindung bilden.

15. Fahrzeugsitz (1), insbesondere Kraftfahrzeugsitz, mit einem ein Polster (10) gemäß einem der Ansprüche 1 bis 14 aufweisenden Sitzteil (2) und/oder einer ein Polster (30) gemäß einem der Ansprüche 1 bis 14 aufweisenden Rückenlehne (4).

## Claims

1. Pad (10, 30) for a seat, in particular a vehicle seat (1), having at least one pad element (12) and a pad cover (18) arranged over the pad element (12), wherein the pad element (12) has at least one side pad element (16), wherein the side pad element (16) has a recess (40) that is open towards the pad cover (18), wherein the recess (40) forms a stowage space in which objects can be stowed, wherein the pad cover (18) has at least one opening (20) corresponding to the recess (40) and at least one covering element (60a, 60b, 60c) which is arranged in the region of the opening (20) and, in a non-use state (P1), covers the opening (20) completely, and, in a use state (P2), exposes the opening (20), in particular exposes it completely, wherein the covering element (60b, 60c) comprises at least two covering parts (62b, 64b; 62c, 64c), which completely cover or close the opening (20) and the recess (40),
**characterized in that**
the covering parts (62b, 64b; 62c, 64c) are laid over one another.

2. Pad (10, 30) according to Claim 1, wherein the side pad element (16) is a side panel.

3. Pad (10, 30) according to one of Claims 1 and 2, wherein the recess (40) is an indentation or cut-out introduced into the pad element (12).

4. Pad (10, 30) according to one of Claims 1 to 3, wherein the pad element (12) is a foam element.

5. Pad (10, 30) according to one of Claims 1 to 4, wherein the pad cover (18) is a trim part.

6. Pad (10, 30) according to one of Claims 1 to 5, wherein the pad cover (18) is formed from textiles or natural materials.

7. Pad (10, 30) according to Claim 6, wherein the pad cover (18) is formed from a fabric, a leather, a plastic or an artificial leather.

8. Pad (10, 30) according to one of Claims 1 to 7, wherein the covering element (60b, 60c) is sewn to a region of the remaining pad cover (18) that surrounds the opening (20).

9. Pad (10, 30) according to one of Claims 1 to 8, wherein the covering element (60b, 60c) is formed from textiles or natural materials.

10. Pad (10, 30) according to Claim 9, wherein the covering element (60b, 60c) is formed from a fabric, a leather, a plastic or an artificial leather.

11. Pad (10, 30) according to one of Claims 1 to 10, wherein the covering parts (62b, 64b; 62c, 64c) are designed to be lockable with one another.

12. Pad (10, 30) according to one of Claims 1 to 11, wherein the stowage space can be covered completely by the covering element (60b, 60c).

13. Pad (10, 30) according to one of Claims 1 to 12, wherein the covering parts (62c, 64c) are provided with locking means (66c) corresponding to one another.

14. Pad (10, 30) according to Claim 13, wherein the locking means (66c) form a hook and loop connection.

15. Vehicle seat (1), in particular a motor vehicle seat, comprising a seat part (2) having a pad (10) according to one of Claims 1 to 14 and/or a backrest (4) having a pad (30) according to one of Claims 1 to 14.

## Revendications

1. Rembourrage (10, 30) pour un siège, en particulier un siège de véhicule (1), présentant au moins un élément de rembourrage (12) et un revêtement de rembourrage (18) agencé au-dessus de l'élément de rembourrage (12), l'élément de rembourrage (12) présentant au moins un élément de rembourrage latéral (16), l'élément de rembourrage latéral (16) présentant un évidement (40) ouvert vers le revêtement de rembourrage (18), l'évidement (40) formant un espace de rangement dans lequel des objets peuvent être rangés, le revêtement de rembourrage (18) présentant au moins une ouverture (20) correspondant à l'évidement (40) et au moins un élément de recouvrement (60a, 60b, 60c) agencé dans la zone de l'ouverture (20), lequel recouvre complètement l'ouverture (20) dans un état de non-utilisation (P1) et dégage, en particulier dégage complètement, l'ouverture (20) dans un état d'utilisation (P2), l'élément de recouvrement (60b, 60c) présentant au moins deux parties de recouvrement (62b, 64b ; 62c, 64c) qui recouvrent ou ferment complètement l'ouverture (20) et l'évidement (40),
**caractérisé en ce que**
les parties de recouvrement (62b, 64b ; 62c, 64c) sont superposées.

2. Rembourrage (10, 30) selon la revendication 1, dans lequel l'élément de rembourrage latéral (16) est une joue latérale.

3. Rembourrage (10, 30) selon l'une quelconque des revendications 1 ou 2, dans lequel l'évidement (40) est une cavité ou un creux pratiqué dans l'élément de rembourrage (12).

4. Rembourrage (10, 30) selon l'une quelconque des revendications 1 à 3, dans lequel l'élément de rembourrage (12) est un élément en mousse.

5. Rembourrage (10, 30) selon l'une quelconque des revendications 1 à 4, dans lequel le revêtement de rembourrage (18) est une partie d'habillage.

6. Rembourrage (10, 30) selon l'une quelconque des revendications 1 à 5, dans lequel le revêtement de rembourrage (18) est formé de textiles ou de matériaux naturels.

7. Rembourrage (10, 30) selon la revendication 6, dans lequel le revêtement de rembourrage (18) est formé d'un tissu, d'un cuir, d'une matière plastique ou d'un similicuir.

8. Rembourrage (10, 30) selon l'une quelconque des revendications 1 à 7, dans lequel l'élément de recouvrement (60b, 60c) est cousu à une zone du reste du revêtement de rembourrage (18) entourant l'ouverture (20) .

9. Rembourrage (10, 30) selon l'une quelconque des revendications 1 à 8, dans lequel l'élément de recouvrement (60b, 60c) est formé de textiles ou de matériaux naturels.

10. Rembourrage (10, 30) selon la revendication 9, dans lequel l'élément de recouvrement (60b, 60c) est formé d'un tissu, d'un cuir, d'une matière plastique ou d'un similicuir.

11. Rembourrage (10, 30) selon l'une quelconque des revendications 1 à 10, dans lequel les parties de recouvrement (62b, 64b ; 62c, 64c) sont configurées de manière à pouvoir être fermées l'une avec l'autre.

12. Rembourrage (10, 30) selon l'une quelconque des revendications 1 à 11, dans lequel l'espace de rangement peut être entièrement recouvert au moyen de l'élément de recouvrement (60b, 60c).

13. Rembourrage (10, 30) selon l'une quelconque des revendications 1 à 12, dans lequel les parties de recouvrement (62c, 64c) sont munies de moyens de fermeture (66c) correspondant les uns aux autres.

14. Rembourrage (10, 30) selon la revendication 13, dans lequel les moyens de fermeture (66c) forment un assemblage à fermeture agrippante.

15. Siège de véhicule (1), en particulier siège de véhicule automobile, comprenant une partie d'assise (2) présentant un rembourrage (10) selon l'une quelconque des revendications 1 à 14 et/ou un dossier (4) présentant un rembourrage (30) selon l'une quelconque des revendications 1 à 14.
